# EUROPÄISCHE PATENTSCHRIFT

(11) **EP 2 675 858 B1**
(45) Veröffentlichungstag und Bekanntmachung des Hinweises auf die Patenterteilung: **24.12.2014**
(21) Anmeldenummer: 12705831.1
(22) Anmeldetag: 16.02.2012
(51) Int. Cl.: C09J 103/08, C09J 9/00

(54) **KLEBESTIFT AUF BASIS VON STÄRKEMISCHETHERN**
GLUE STICK BASED ON STARCH MIXED ETHERS
BÂTON DE COLLE À BASE D'ÉTHERS MIXTES D'AMIDON

(30) Priorität: 17.02.2011 DE 102011004340
(43) Veröffentlichungstag der Anmeldung: 25.12.2013
(73) Patentinhaber: Henkel AG & Co. KGaA, 40589 Düsseldorf (DE)
(72) Erfinder: HOFFMANN, Heinz-Peter, 40789 Monheim (DE); HRZIBEK, Martin, 42781 Haan (DE); MÜLLER, Wolf-Rüdiger, 40724 Hilden (DE); NEUHAUSEN, Ulrich, 40545 Düsseldorf (DE); MAIER, Wolfgang, 40721 Hilden (DE); SCHRIEFERS, Mathias, 41239 Mönchengladbach (DE)
(86) Internationale Anmeldenummer: PCT/EP2012/052675
(87) Internationale Veröffentlichungsnummer: WO 2012/110594

(56) Entgegenhaltungen:
- WO-A1-2007/096123
- WO-A2-93/03109

## Beschreibung

Die Erfindung liegt auf dem Gebiet der Klebstoffe, insbesondere der Klebestifte, und betrifft einen Klebestift auf Basis spezieller Stärkemischether, seine Herstellung und Verwendung.

Klebestifte (= stäbchenförmige Klebstoffe, die in einer verschließbaren Hülle verschiebbar gelagert sind und beim Abreiben auf einer Substratoberfläche einen klebrigen Film hinterlassen) sind heute Gebrauchsgegenstände des täglichen Lebens. Sie enthalten beispielsweise wasserlösliche bzw. wasserdispergierbare synthetische Polymere mit Klebstoffcharakter- insbesondere Polyvinylpyrrolidon (PVP) - gelöst in einer wässrig-organischen Flüssigphase zusammen mit einer Form gebenden Gerüstsubstanz. Als Gerüstsubstanz werden insbesondere Alkali- bzw. Ammoniumsalze aliphatischer Carbonsäuren, insbesondere des C-Zahlbereichs von 12 bis 22, verwendet. Werden die an sich hochklebrigen wässrigen Zubereitungen der Polymersubstanzen mit Klebstoffcharakter zusammen mit geringen Mengen der Gerüstsubstanz auf Basis von Fettsäureseifen auf höhere Temperaturen, insbesondere oberhalb 50°C, erwärmt und lässt man diese Lösung in Ruhestellung abkühlen, so erstarrt das Stoffgemisch zu einem mehr oder weniger steifen Seifengel, in dem die Form gebende und vergleichsweise starre Micellstruktur solcher Seifengele zunächst überwiegend in Erscheinung tritt. Das ermöglicht die bekannte Ausbildung und Handhabung solcher Massen in Stiftform in verschließbaren Hülsen. Beim Abreiben wird die Micellstruktur zerstört und damit die starre Masse in den pastösen Zustand umgewandelt, in dem dann der Klebstoffcharakter des Stoffgemisches in den Vordergrund tritt.

Anstelle der wasserlöslichen bzw. wasserdispergierbaren synthetischen Polymere mit Klebstoffcharakter werden als klebende Komponente auch Polymere auf Basis natürlicher Rohstoffe eingesetzt.

So offenbart WO 93/03109 A1 Klebestifte auf Basis von viskositätsreduzierten Stärkederivaten.
Vorzugsweise kommen nicht-ionische Stärkeether zum Einsatz, die durch Umsetzung nativer Stärke mit Ethylenoxid, Propylenoxid, Butylenoxid und/oder Glycid erhalten werden. Als besonders geeignet werden Hydroxyalkylstärken beschrieben, wobei auch Mischveretherungsprodukte erfolgreich verwendet werden können. In den Beispielen kommen überwiegend Hydroxyethylstärken und Hydroxypropylstärken zum Einsatz, aber auch der Einsatz von Hydroxyethyl-Hydroxypropyl-Stärke ist den Beispielen zu entnehmen.

In der WO 99/51699 A1 sind Klebestifte beschrieben, die ebenfalls auf viskositätsreduzierten Stärkederivaten basieren. Diese entsprechen den aus WO 93/03109 A1 bekannten Derivaten. Der Klebestift weist als klebende Komponente eine wässrige Zubereitung auf, die neben den genannten Stärkeethern auch Saccharose enthält, sowie als Gerüstsubstanz ein Seifengel.

Die bekannten Klebestifte besitzen ein für die meisten Anwendungen zufrieden stellendes Leistungsniveau. Allerdings ist es aus produktionstechnischer Sicht in der Regel notwendig, den Klebestiften Hilfsstoffe zuzusetzen. So werden als Hilfsstoffe insbesondere Celluloseether zur Viskositätstabilisierung der Masse eingebracht. Dies ist speziell für den Abfüllprozess von Bedeutung, da eine zu geringviskose Masse aus den bereit gestellten Hülsen heraus laufen würde. Gleichzeitig führt der Celluloseether bei den Abriebeigenschaften des Stiftes zu Mängeln dahingehend, dass sich bei Anwendung kleine Teile lösen und der Stift schmiert. Wichtige, für den Verbraucher erfahrbare Gebrauchseigenschaften wie Festigkeit und Abrieb dieser Klebestifte sind daher noch verbesserungswürdig.

Es besteht daher Bedarf an Klebestiften, die die vorstehend aufgeführten Nachteile nicht aufweisen und optimierte Verarbeitungs- und Anwendungseigenschaften besitzen.

Aufgabe der vorliegenden Erfindung ist es daher, einen Klebestift bereitzustellen, der einerseits gute Festigkeit in Kombination mit hervorragenden Abriebeigenschaften sowie guter Klebkraft und Lagerstabilität zeigt. Andererseits soll die dem Stift zugrunde liegende Mischung unter den bei der Herstellung herrschenden Bedingungen - insbesondere also bei Temperaturen oberhalb von 50°C - eine für das problemlose Einbringen der Klebemasse in die Stifthülsen geeignete Viskosität aufweisen, ohne dass der Einsatz von Cellulosederivaten zur Viskositätstabilisierung notwendig ist.

Die Lösung der Aufgabe ergibt sich aus dem Grundgedanken der Erfindung, den Formulierungen der Klebestifte spezielle Stärkemischether zuzusetzen.

Gegenstand der Erfindung ist daher ein Klebestift, der eine wässrige Zubereitung mindestens einer Hydroxyalkylcarboxymethylstärke mit einer Viskosität kleiner als 2.000.000 mPas, bestimmt als 40 Gew.- %ige wässrige Lösung mittels eines Brookfield-Viskosimeters RVT bei 20°C, Spindel 7, 20 U/min, und Seife enthält.

Überraschenderweise führt der Einsatz von Hydroxyalkylcarboxymethylstärken sowohl zu stabilisierenden Eigenschaften während der Produktion, als auch zu verbesserten Abriebeigenschaften bei zumindest gleich bleibenden Klebeergebnissen der resultierenden Klebestifte. Die Anfangsklebkraft handelsüblicher Klebestifte auf Basis von viskositätsreduzierten Hydroxyalkylstärken lässt sich problemlos erreichen und sogar leicht übertreffen. Die Anfangsklebkraft handelsüblicher Klebestifte auf Basis von Polyvinylpyrrolidon wird deutlich übertroffen. Dabei kann auf die Zugabe üblicher Stoffe zur Stabilisierung der Viskosität, insbesondere Celluloseether, verzichtet werden.

Ein erfindungsgemäßer Klebestift zeichnet sich durch verbesserte Festigkeit und einen gleichmäßigeren Abrieb gegenüber bekannten Klebestiften bei hervorragenden Klebe- und Lagereigenschaften aus. Die Verklebungen behalten auch bei längeren Lagerzeiten ihre weiße Farbe bei und vergilben nicht. Bei Temperaturen um 80°C zeigt die dem Stift zugrunde liegende Klebemischung zudem eine solche Viskosität, dass sie einerseits leicht in die Stifthülsen eingebracht werden kann, andererseits aber auch nicht durch undichte Stellen im Ansatzbereich der Stiftschraube wieder aus der Hülse austritt.

Mit den erfindungsgemäßen Klebestiften lassen sich dauerhafte Verklebungen von Substraten realisieren. Sie lassen sich insbesondere zum dauerhaften flächigen Verbinden von Substraten, insbesondere von Papier, Pappe, Holz und /oder Kunststoff miteinander einsetzen.

Die erfindungsgemäßen Klebestifte enthalten als klebende Komponente eine wässrige Zubereitung mindestens einer Hydroxyalkylcarboxymethylstärke mit einer Viskosität kleiner als 2.000.000 mPas, bestimmt als 40 Gew.-%ige wässrige Lösung mittels eines Brookfield-Viskosimeters RVT bei 20°C, Spindel 7, 20 U/min.

Hydroxyalkylcarboxymethylstärtcen gehören zur Gruppe der Stärkeether und können auch als Stärkemischether bezeichnet werden. Sofern im Folgenden von Stärkemischethern die Rede ist, sind darunter Hydroxyalkylcarboxymethylstärken zu verstehen.

Nach Ullmann, Encyklopädie der technischen Chemie, 4. Auflage, Verlag Chemie, Weinheim/Bergstraße (1974) sind Stärkeether formal Produkte der Kondensation zwischen den Hydroxygruppen der Anhydroglucose-Einheiten (AGE) von Stärkemolekülen und alkoholischen Hydroxygruppen anderer Verbindungen. Nur einige wasserlösliche dieser Stärkeethertypen werden in größerem Umfang hergestellt und industriell eingesetzt. Hierzu gehören bestimmte Hydroxyalkylstärken, speziell Hydroxyethyl- und Hydroxypropylstärke, sowie Carboxymethylstärke. Aber auch eine Reihe verschiedener Hydroxyalkylcarboxymethylstärken ist kommerziell verfügbar.

Vorzugsweise werden erfindungsgemäß als Hydroxyalkylcarboxymethylstärken Hydroxy-C₁-C₁₀-alkylcarboxymethylstärken, besonders bevorzugt Hydroxy-C₂-C₆-alkylcarboxymethylstärken eingesetzt. Ganz besonders bevorzugt wird die Hydroxyalkylcarboxymethylstärke ausgewählt aus Hydroxyethyl-carboxymethylstärken, Hydroxypropylcarboxymethylstärken und/oder Hydroxyethylhydroxypropyl-carboxymethylstärken, wobei die Hydroxypropylcarboxymethylstärken wiederum bevorzugt sind.

Besonders bevorzugt eingesetzte Hydroxypropylcarboxymethylstärken werden durch Umsetzung einer Stärke mit Monochloressigsäure und/oder Monochloracetat und Propylenoxid erhalten, wobei Monochloressigsäure und/oder Monochloracetat einerseits und Propylenoxid andererseits in einem molaren Verhältnis von 10 : 1 bis 1 : 100, vorzugsweise von 5 : 1 bis 1 : 50, besonders bevorzugt von 5 : 1 bis 1 : 10, eingesetzt werden. In der Regel erfolgt die Umsetzung dabei in zwei Stufen, wobei die Stärke in einer ersten Stufe mit Monochloressigsäure und/oder Monochloracetat, und das entstehende Stärkederivat in einer zweiten Stufe dann mit Propylenoxid umgesetzt wird. In der ersten Stufe werden dabei Carboxymethylgruppen in das Stärkemolekül eingeführt. Durch Umsetzung mit dem Propylenoxid werden an diesen Carboxymethylgruppen und/oder noch vorhandenen freien Hydroxygruppen der Anhydroglucose-Einheiten (AGE) der Stärkemoleküle Hydroxypropylgruppen bzw. hydroxyterminierte Polypropylenoxidketten angeknüpft. Das molare Verhältnis von Carboxymethylgruppen und Hydroxypropylgruppen im Stärkemolekül wird vom entsprechenden molaren Verhältnis der eingesetzten Edukte bestimmt. Werden hydroxyterminierte Polypropylenoxidketten aufgebaut, so wird unter dem molaren Gehalt an Hydroxypropylgruppen im Stärkemolekül die Summe des molaren Gehalts an endständigen Hydroxypropylgruppen und des molaren Gehalts an Propylenoxideinheiten in der Polypropylenoxidkette verstanden. Ein Mol einer Gruppe -CH₂CH(CH₃)-O-CH₂CH(CH₃)-OH entspricht daher beispielsweise zwei Mol Hydroxypropylgruppen im Stärkemolekül.

Zur Herstellung der erfindungsgemäß einsetzbaren Stärkemischether lassen sich im Prinzip alle nativen Stärken einsetzen. Geeignete Stärken lassen sich dem genannten Ullmann, Band 22 in den Unterkapiteln 6.2 bis 6.4 zum Kapitel "Stärke" entnehmen. Neben den Getreidestärken wie Mais-, Weizen- oder Reisstärke sowie Knollen- oder Wurzelstärken wie Kartoffel-, Cassava- oder Tapiokastärke sind auch Leguminosenstärken wie Erbsen- oder Bohnenstärke geeignet. Vorzugsweise basieren die erfindungsgemäß einsetzbaren Stärkemischether jedoch auf Knollen- oder Wurzelstärken, besonders bevorzugt auf Kartoffelstärke.

Die wässrigen Zubereitungen viskositätsreduzierter Stärkemischether werden vorzugsweise dadurch hergestellt, dass man die Stärkemischether mit Wasser mischt und die Überstrukturen der Stärkemischether durch physikalische, insbesondere mechanische Einwirkung - weitestgehend irreversibel - abbaut und/oder die Stärkemischether chemisch abbaut, z. B. oxidiert, säurekatalytisch, enzymatisch bzw. thermisch abbaut. Auch eine Kombination der Einwirkungen ist möglich. Dabei werden konzentrierte Systeme mit einem Stärkeethergehalt von etwa 20 bis 70 Gew.-% bevorzugt, da sich erwiesen hat, dass in diesen Konzentrationsbereichen die technische Handhabung am einfachsten ist. Anschließend können die wässrigen Zubereitungen mit den übrigen Bestandteilen in beschriebener Weise zusammengebracht werden. Gewünschtenfalls können die Stärkederivatzubereitungen vordem Vermengen mit den anderen Bestandteilen verdünnt werden, vorzugsweise auf einen Stärkemischethergehalt von 30 bis 60 Gew.-%.

Der mechanische Abbau der Strukturen derartiger wässriger Systeme kann in dem Fachmann bekannten mechanischen Vorrichtungen erfolgen. Als solche Vorrichtungen eignen sich beispielsweise Kneter, Extruder, Stator/Rotor-Maschinen und/oder Rührwerke. Der Grad des mechanischen Abbaus der Überstrukturen der wässrigen Stärkederivatsysteme ist abhängig von der Konzentration, der Temperatur, der Verweilzeit und der Scherung. Der Abbaugrad der Stärkeüberstrukturen sollte vorteilhafterweise nahe am erreichbaren Grenzwert liegen. Der Abbaugrad kann durch die Bestimmung der Lösungsviskositäten ermittelt werden. Ohne Nachteile kann der Abbau der Stärkeüberstrukturen auch während der Herstellung der Klebestiftmassen in Ansatzvorrichtungen erfolgen, in denen ein ausreichender Abbaugrad der Stärkeüberstrukturen erreicht werden kann.

Der mechanische Abbau der Stärke- bzw. Stärkeetherüberstrukturen kann durch einen chemischen Abbau der Stärkemoleküle auf das erfindungsgemäße Viskositätsniveau ergänzt oder ersetzt werden. Der (partielle) chemische Abbau der Stärke- bzw. Stärkeethermoleküle kann sowohl vor als auch nach dem mechanischen Abbau der Stärkeüberstrukturen durchgeführt werden. Ebenso können beide Prozesse auch voneinander unabhängig alleine durchgeführt werden. Die Viskositätsreduzierung der Stärkemischetherlösung kann auch ausschließlich durch einen chemischen Abbau auf das erfindungsgemäße Viskositätsniveau erfolgen. Der Abbau der Stärkemoleküle kann nach dem Fachmann bekannten Verfahren durch oxidativen, säurehydrolytischen, enzymatischen oder thermischen Abbau erfolgen.

In "Ullmanns Encyklopädie der technischen Chemie", 4. Auflage, Verlag Chemie, Weinheim (1974) sind die üblichen Verfahren zum Abbau von Stärken näher beschrieben. Bevorzugte Oxidationsmittel für den oxidativen Abbau sind Chromsäure, Permanganat, Wasserstoffperoxid, Stickstoffdioxid, Hypochlorit, Perjodat und Persäuren wie z.B. Peressigsäure. Als Säuren für den säurehydrolytischen Abbau werden bevorzugt Salzsäure, Schwefel- oder Phosphorsäure eingesetzt, aber auch die Verwendung anderer Säuren wie z. B. Essigsäure, Oxalsäure, schweflige Säure, Perchlorsäure oder Trichloressigsäure ist möglich. Als Stärke abbauende Enzyme können α- und β-Amylasen sowie die Glucoamylasen und entzweigende Enzyme eingesetzt werden.

Ein ausreichender Abbaugrad im Sinne der Erfindung ist zweckmäßigerweise erreicht, wenn eine 40 Gew.-%ige wässrige Lösung des verwendeten Stärkemischethers bei 20 °C eine Viskosität nach Brookfield von kleiner 2.000.000 mPas, etwa 100 bis 1.000.000 mPas, vorzugsweise 2.000 bis 100.000 mPas, insbesondere 10.000 bis 80.000 mPas aufweist.

Die in den Klebestiften enthaltenen Hydroxyalkylcarboxymethylstärken weisen daher vorzugsweise eine Viskosität von 100 bis 1.000.000 mPas, vorzugsweise von 2.000 bis 100.000 mPas, besonders bevorzugt von 10.000 bis 80.000, jeweils bestimmt als 40 Gew.-%ige wässrige Lösung mittels Brookfield-Viskosimeter RVT bei 20°C, Spindel 7, 20 U/min, auf.

Die Klebestifte enthalten die Hydroxyalkylcarboxymethylstärke vorzugsweise in einer Gesamtmenge von 5 bis 50, besonders bevorzugt von 10 bis 40 Gew.-%, bezogen auf die Gesamtmasse des Klebestiftes. Werden Gemische mehrerer Hydroxyalkylcarboxymethylstärken eingesetzt, so ist unter der Gesamtmenge selbstverständlich die Summe der Mengen jeder eingesetzten Hydroxyalkylcarboxymethylstärke zu verstehen.

Als besonders geeignet haben sich Klebestifte erwiesen, die 5 bis 10 Gew.-% Stärkemischether mit einer Viskosität von 1.000.000 bis 50.000 mPas oder 10 bis 30 Gew.-% mit einer Viskosität von 100.000 bis 2.000 mPas oder 30 bis 50 Gew.-% mit einer Viskosität von 30.000 bis 100 mPas enthalten. Die Gew.-% beziehen sich auf das Gesamtgewicht des Klebestiftes.

Vorzugsweise werden Hydroxyalkylcarboxymethylstärken eingesetzt, deren Substitutionsgrad (DS) 0,1 bis 2,0, vorzugsweise 0,2 bis 1,0 beträgt.

Der erfindungsgemäße Klebestift kann mindestens zwei verschiedene Hydroxyalkylcarboxymethylstärken enthalten. Vorzugsweise enthält der erfindungsgemäße Klebestift mindestens zwei verschiedene Hydroxypropylcarboxymethylstärken, besonders bevorzugt mindestens zwei verschiedene Hydroxypropylcarboxymethylstärken, die sich durch das molare Verhältnis von Hydroxypropyl- zu Carboxymethylgruppen voneinander unterscheiden. Vorzugsweise wird dabei als erste Hydroxypropylcarboxymethylstärke eine Hydroxypropylcarboxymethylstärke eingesetzt, die durch Umsetzung einer Stärke mit Monochloressigsäure und/oder Monochloracetat und Propylenoxid erhalten wird, wobei Monochloressigsäure und/oder Monochloracetat einerseits und Propylenoxid andererseits in einem molaren Verhältnis von 1 : 2 bis 1 : 100, vorzugsweise von 1 : 2 bis 1 : 50, besonders bevorzugt von 1 : 2 bis 1 : 5, eingesetzt werden. Als zweite Hydroxypropylcarboxymethylstärke wird vorzugsweise eine Hydroxypropylcarboxymethylstärke eingesetzt, die durch Umsetzung einer Stärke mit Monochloressigsäure und/oder Monochloracetat und Propylenoxid erhalten wird, wobei Monochloressigsäure und/oder Monochloracetat einerseits und Propylenoxid andererseits in einem molaren Verhältnis von 10 : 1 bis 1 : 1, vorzugsweise von 8 : 1 bis 2 : 1, besonders bevorzugt von 5 : 1 bis 3 : 1, eingesetzt werden. Mit anderen Worten liegen einmal die Hydroxyalkylgruppen und im anderen Fall die Carboxymethylgruppen im molaren Überschuss vor. Erste und zweite Hydroxypropylcarboxymethylstärke werden dabei vorzugsweise in solchen Mengen eingesetzt, dass das Gewichtsverhältnis von erster zu zweiter Hydroxypropylcarboxymethylstärke bei 100 : 1 bis 1 : 1, vorzugsweise bei 50 : 1 bis 2 : 1, besonders bevorzugt bei 25 : 1 bis 5 : 1 liegt.

Die erfindungsgemäß eingesetzten Stärkemischether können unvernetzt oder vernetzt vorliegen. Vernetzte Stärkemischether weisen zusätzlich Wasser retardierende Eigenschaften auf, wodurch die Viskosität der Stiftmasse erhöht wird. Überraschend treten jedoch noch weitere positive Effekte auf. Es werden bessere Festigkeiten und Abriebeigenschaften erzielt. Der Klebestift trägt sehr gleichmäßig, d. h. unter nur sehr geringem Abwurf von Brocken auf, ohne dabei zu viel an Masse zu verlieren.

Ein erfindungsgemäßer Klebestift enthält eine wässrige Zubereitung mindestens einer Hydroxyalkylcarboxymethylstärke. Neben der Hydroxyalkylcarboxymethylstärke kann auch mindestens ein weiterer makromolekularer Stoff vorgesehen sein. Der weitere makromolekulare Stoff kann beispielsweise ausgewählt sein aus von Hydroxyalkylcarboxymethylstärke verschiedenen Stärkederivaten, Polyvinylacetalen, Polyacrylaten, Polyurethanen, Polyvinylpyrrolidon, Alkoholen, Cellulosen, Proteinen und/oder Gemischen davon.

Bevorzugte weitere makromolekulare Stoffe sind ausgewählt aus viskositätsreduzierten Stärkeethern, Polyvinylpyrrolidon, Polyurethanen, Polyvinylalkoholen und/oder Gemischen davon. Besonders bevorzugte weitere makromolekulare Stoffe sind ausgewählt aus viskositätsreduzierten Stärkeethern und Polyurethanen. Unter "viskositätsreduzierten" Stärkeethem werden Stärkeether verstanden, die nicht nur weitgehend polymeranalog verethert wurden, sondern darüber hinaus auch noch chemisch oder physikalisch so destrukturiert wurden, dass ihre Viskosität kleiner als ca. 2.000.000 mPas ist (40 %ige Lösung, 20 °C, Brookfield).

Bevorzugte viskositätsreduzierte Stärkeether sind dabei nicht ionische Stärkeether, die durch Umsetzung von nativen Stärken mit Ethylenoxid, Propylenoxid, Butylenoxid und/oder Glycid erhältlich sind. Dabei kann die Umsetzung mit einem der genannten Stoffe allein, mit Gemischen der Stoffe oder sequentiell mit mehreren der Stoffe erfolgen, beispielsweise zunächst mit Ethylenoxid und sodann mit Propylenoxid. Hierdurch wird ein Ethylenoxidblock angeknüpft, an den sich ein Propylenoxidblock anschließt. Insbesondere Stärkederivate mit höheren Substitutionsgraden, vorzugsweise nicht ionogene Stärkeether, lassen sich vorteilhafterweise bei mechanischer Behandlung in wässrigen Systemen durch den Abbau von kristallinen Strukturen und/oder durch oxidativen, säurehydrolytischen, enzymatischen und thermischen Abbau auf ein relativ niedriges Viskositätsniveau einstellen und sind deshalb in besonderem Maße geeignet. Besonders bevorzugt sind dabei Hydroxyalkylstärken. Vorzugsweise sollte der Substitutionsgrad (DS) 0,1 bis 2,0, insbesondere 0,2 bis 1,0 betragen. Die Einstellung der gewünschten Viskosität kann nach den Verfahren erfolgen, die bereits oben bei der Herstellung der erfindungsgemäß eingesetzten Hydroxyalkylcarboxymethylstärken beschrieben wurden.

Enthält der erfindungsgemäße Klebestift neben mindestens einer Hydroxyalkylcarboxymethylstärke auch mindestens einen weiteren makromolekularen Stoff, so liegt die Gesamtmenge an makromolekularen Stoffen, d.h. an Hydroxyalkylcarboxymethylstärke und weiteren makromolekularen Stoffen vorzugsweise bei 5 bis 50 Gew.-%, besonders bevorzugt bei 10 bis 40 Gew.-%, jeweils bezogen auf die Gesamtmasse des Stiftes.

Die Zugabe weiterer makromolekularer Stoffe ist jedoch erfindungsgemäß nicht notwendig. Insbesondere kann auf die Zugabe von Polyvinylpyrrolidonen und Cellulosederivaten verzichtet werden, In einer speziellen Ausführungsform ist der erfindungsgemäße Klebestift frei von Carboxymethylcellulosen. Ein derartiger Klebestift zeichnet sich insbesondere durch einen sparsameren Auftrag bei gleich bleibender Klebeleistung und nochmals verbesserte Langzeitstabilität der Verklebung aus. Bevorzugt ist der erfindungsgemäße Klebestift frei von Polyvinylpyrrolidonen und jeglichen Cellulosederivaten. Frei von ist dabei wörtlich als 0 Gew.-% zu verstehen. Ganz besonders bevorzugt enthält der erfindungsgemäße Klebestift als makromolekulare Stoffe ausschließlich die erfindungsgemäß einzusetzenden Stärkemischether.

Ein erfindungsgemäßer Klebestift enthält darüber hinaus Seife.

Bevorzugt ist die Seife das Natriumsalz von C₁₂- bis C₂₂-Fettsäuren, insbesondere von C₁₄- bis C₁₈-Fettsäuren, natürlichen oder synthetischen Ursprungs. Die Seife bzw. das Seifengel dient vor allem als Form gebende Gerüstsubstanz. Natriumsalze der Fettsäuren sind härter als beispielsweise die entsprechenden Kaliumsalze und daher gut als Gerüstbildner geeignet.

Die Seife ist vorzugsweise in Mengen von 3 bis 20 Gew.-%, besonders bevorzugt von 4 bis 10 Gew.-%, bezogen auf die Gesamtmasse des Klebestiftes, enthalten. In diesen Anteilen kann das Seifengel optimal die gewünschte Gerüststruktur ausbilden, welche die Basis für die hervorragende Festigkeit des erfindungsgemäßen Klebestiftes bildet. Andererseits lässt sich die Gerüststruktur beim Abreiben auf der zu verklebenden Fläche aber auch hinreichend leicht zerstören, so dass dann wie gewünscht der Klebstoffcharakter der Zubereitung in den Vordergrund tritt.

Ein erfindungsgemäßer Klebestift kann zusätzlich Gelatine enthalten. Die Menge an Gelatine beträgt vorzugsweise 0 bis 10 Gew.-% und insbesondere 1,5 bis 5 Gew.-%, bezogen auf die Gesamtmasse des Klebestiftes. Es können dabei beliebige Gelatinequalitäten eingesetzt werden.

Darüber hinaus kann in einem erfindungsgemäßen Klebestift eine Kombination aus mineralischem Füllstoff, insbesondere Bariumsulfat, und Gelatine eingesetzt werden. Es kann dabei zu einer synergistischen Eigenschaftsverbesserung der Klebeeigenschaften durch die Kombination von mineralischem Füllstoff, insbesondere Bariumsulfat, und Gelatine kommen.

Der Klebestift kann weiterhin Saccharose enthalten. Saccharose als preiswerte und darüber hinaus völlig unbedenkliche Substanz ist hervorragend als Füllstoff für einen erfindungsgemäßen Klebestift geeignet. In einer bevorzugten Ausführungsform des erfindungsgemäßen Klebestiftes enthält dieser daher Saccharose, wobei der Gehalt an Saccharose, bezogen auf die Gesamtmasse des Klebestiftes, vorzugsweise 15 bis 25, besonders bevorzugt 17 bis 22 Gew.-%, beträgt.

Die Klebestifte können weiterhin Superabsorber enthalten. Unter Superabsorbem werden im Rahmen der vorliegenden Erfindung Partikel aus synthetischen oder zumindest teilsynthetischen Materialien verstanden, die mindestens das 4fache, bevorzugt mindestens das 10fache und besonders bevorzugt mindestens das 100fache ihrer Masse an Wasser aufnehmen können. Allen Superabsorbern ist trotz Unterschieden im chemischen Aufbau gemein, dass sie in der Lage sind, auch unter einer mäßigen Druckbelastung das vorstehend aufgeführte Vielfache ihrer Masse an wässrigen Flüssigkeiten aufzunehmen und zurückzuhalten. Superabsorber, wie sie im Kontext der vorliegenden Erfindung eingesetzt werden können, sind bisher insbesondere von ihren Anwendungen in Babywindeln und speziellen Hygieneprodukten bekannt.

Der Superabsorber kann beispielsweise in Form von Partikeln mit einer Korngröße von 1 bis 1000 µm enthalten sein. In diesem Korngrößenbereich sind die Permeabilität und damit die Absorptionseigenschaften der Superabsorber vorteilhaft ausgeprägt. Bevorzugt werden Superabsorber eingesetzt, die einen mittleren Teilchendurchmesser von maximal 150 µm, bevorzugt von 100 µm und besonders bevorzugt von 70 µm, aufweisen. Ein derartige Superabsorber enthaltender Klebestift zeichnet sich insbesondere durch einen sparsameren Auftrag bei gleich bleibender Klebeleistung und nochmals verbesserte Lagerstabilität der Verklebung aus.

Der Klebestift kann den Superabsorber beispielsweise in einer Menge von 0,2 bis 3 Gew.-%, bezogen auf die Gesamtmasse des Klebestiftes, enthalten. Innerhalb dieser Spanne wird ein besonders ausgewogenes Verhältnis von hervorragender Festigkeit der erstarrten Stiftmasse und einer hohen Lagerstabilität erreicht. Besonders bevorzugt ist der Superabsorber in einer Menge von 0,3 bis 2 Gew.-%, bezogen auf die Gesamtmasse des Klebestiftes, enthalten. Insbesondere beträgt der Anteil des Superabsorbers 0,4 bis 1,2 Gew.-%, bezogen auf die Gesamtmasse des Klebestiftes. Innerhalb dieser Bandbreite werden optimale Festigkeitswerte bei konstant guter Lagerstabilität erhalten.

Neben den bisher aufgeführten Komponenten können weitere übliche Hilfsmittel mit verwendet werden, beispielsweise Substanzen, die den leichten und weichen Abrieb fördern. Derartige Substanzen sind beispielsweise Aminocarbonsäuren und/oder ihre Lactame. Geeignete Aminocarbonsäuren bzw. deren Lactame sollten bis zu 12 C-Atomen, insbesondere 4 bis 8 C-Atome enthalten. Der für die praktische Verwendung bevorzugte Vertreter ist Epsilon-Caprolactam bzw. die sich daraus ableitende 7-Aminocapronsäure. Die Menge der zu verwendenden Lactame oder der entsprechenden Aminocarbonsäuren beträgt üblicherweise nicht mehr als 15 Gew.-%, beispielsweise 0,5 Gew.-% bis 5 Gew.-%, bezogen auf die Gesamtstiftmasse.

Als weitere Hilfsstoffe können die erfindungsgemäßen Klebestifte (weitere) Pigmente, Farbstoffe, Duftstoffe, Konservierungsmittel und dergleichen enthalten. Die Mengen dieser Stoffe sind wie üblich untergeordnet. Weitere mögliche Additive sind beispielsweise weitere Füllstoffe, optische Aufheller, Dextrine und nicht destrukturierte Stärkederivate. Ferner können Mannane, insbesondere Galactomannane in den erfindungsgemäßen Klebestiften enthalten sein. Geeignet sind insbesondere die Galactomannane aus den Früchten des Johannisbrotbaums und aus Guarmehl. Die destrukturierten Stärkeether können auch zu einem untergeordneten Anteil durch destrukturierte Mannane ersetzt werden.

Als geeignete Hilfsstoffe sind weiterhin beispielsweise Weichmacher und/oder die Feuchtigkeit regulierende Stoffe, beispielsweise organische wasserlösliche Lösungsmittel, die üblicherweise in Klebestiften verwendet werden, zu nennen. Die nicht-flüchtigen organischen Lösungsmittel sollten hierbei höchstens in Mengen bis 50 Gew.-%, bezogen auf den Wassergehalt der Stifte, eingesetzt werden. Mit eingesetzt werden können weiterhin mehrwertige (polyfunktionelle) Alkohole wie Propylenglykol, Glycerin, Polyglycerine, Trimethylolpropan, Polyetherglykole sowie Sorbit und/oder niedermolekulare Stärkehydrolysate, die durch Wasserstoffreduktion in die entsprechenden Polyole umgesetzt wurden. Es kann beispielsweise ein Gemisch aus Glycerin und Polyethylenglykol mit verwendet werden. Vorzugsweise beträgt der Gehalt an Glycerin und Propylenglykol, speziell Propylenglykol, 0 bis 15, insbesondere 5 bis 10 Gew.-%, bezogen auf den gesamten Klebestift.

Die vorstehend angegebenen Mengen der einzelnen Inhaltsstoffe ergeben zusammen mit dem zusätzlich vorliegenden Wasser jeweils insgesamt 100 Gew.-%.

In einer bevorzugten Ausführungsform besteht der erfindungsgemäße Klebestift aus
- 5 bis 50 Gew.-% makromolekularem Stoff, enthaltend mindestens eine Hydroxyalkyl-carboxymethylstärke,
- 3 bis 20 Gew.-% Seife,
- 0 bis 30 Gew.-% Saccharose,
- 0 bis 25 Gew.-% weitere Hilfsstoffe, und
- 25 bis 92 Gew.-% Wasser,
wobei die Gesamtmenge der Inhaltsstoffe 100 Gew.-% ergibt.

Bezüglich bevorzugter Inhaltsstoffe und bevorzugter Mengen der einzelnen Bestandteile gilt das bereits oben Gesagte analog.

Ein weiterer Gegenstand der vorliegenden Erfindung ist ein Verfahren zur Herstellung eines erfindungsgemäßen Klebestiftes, das dadurch gekennzeichnet ist, dass die wässrige Zubereitung mindestens einer Hydroxyalkylcarboxymethylstärke mit der Seife oder den die Seife bildenden Bestandteilen und ggf. den Füll- und/oder Hilfsstoffen vermischt wird, gegebenenfalls unter Erwärmen, bis eine gleichmäßige Mischung entstanden ist, und die Mischung ohne mechanische Beeinflussung stehengelassen oder abgekühlt wird. Es ist bevorzugt, die gleichmäßige Mischung nach Erwärmen auf Temperaturen von mindestens 50°C, vorzugsweise auf bis zu 80°C, direkt in Stifthülsen oder ähnliche Gebinde abzufüllen und ohne mechanische Beeinflussung zu den erwünschten Gelen erstarren zu lassen. Dieses Verfahren ist vorteilhaft, weil sich die Mischungen im erwähnten Temperaturbereich leicht gießen lassen. Die erfindungsgemäßen Klebestifte zeichnen sich durch gegenüber dem Stand der Technik nochmals optimierte Viskositäten bei Temperaturen um 80°C aus und können daher besonders gut verarbeitet werden.

Ein erfindungsgemäßer Klebestift weist eine hervorragende Druckfestigkeit auf. Gleichzeitig verfügt er über optimierte Abriebeigenschaften. Darunter ist zu verstehen, dass der Stift zum einen gleichmäßig aufträgt und zum anderen so viel Masse aufträgt, dass eine gute Verklebung der Substrate erreicht wird, aber kaum überschüssiger Klebstoff abgegeben wird, d. h. der Stift verliert kaum Klümpchen, die Bildung von lokalen Klebstoffüberschüssen und Unebenheiten auf der Substratoberfläche wird minimiert. Zusätzlich äußert sich der optimierte Abrieb in einer für den Benutzer angenehmeren Anwendung, der Stift gleitet besser über die zu verklebende Oberfläche. Die Klebeeigenschaften eines erfindungsgemäßen Klebestiftes sind ebenfalls hervorragend. Darüber hinaus ist die Lagerstabilität erhöht, die Verklebungen behalten auch bei längeren Lagerzeiten ihre weiße Farbe bei und vergilben nicht.

Ein weiterer Gegenstand der vorliegenden Erfindung ist die Verwendung eines erfindungsgemäßen Klebestiftes zum flächigen Verbinden, insbesondere zum Verkleben, von Substraten, insbesondere zum Verbinden von Papier, Pappe, Holz und/oder Kunststoff miteinander.

Im Folgenden wird die Erfindung anhand von Ausführungsbeispielen näher erläutert. Soweit nicht anders angegeben, beziehen sich Prozentangaben und Mengenverhältnisse auf das Gewicht.

### Beispiele

### I Ausgangsmaterialien

- Stärkemischether A: Hydroxypropylcarboxymethylstärke auf Basis von Kartoffelstärke;
   Molverhältnis Hydroxypropyl zu Carboxymethyl > 1; Viskosität bestimmt als 40 Gew.-%ige wässrige Lösung mittels Brookfield-Viskosimeter RVT bei 20°C, Spindel 7, 20 U/min: ca. 70.000 mPas;
- Stärkemischether B: Hydroxypropylcarboxymethylstärke auf Basis einer Mischung aus Kartoffel- und Tapiokastärke; Molverhältnis Hydroxypropyl zu Carboxymethyl > 1; Viskosität bestimmt als 40 Gew.-%ige wässrige Lösung mittels Brookfield-Viskosimeter RVT bei 20°C, Spindel 7, 20 U/min: ca. 80.000 mPas;
- Stärkemischether C: Hydroxypropylcarboxymethylstärke auf Basis von Kartoffelstärke;
   Molverhältnis Hydroxypropyl zu Carboxymethyl < 1; Viskosität bestimmt als 10 % Gew.-%ige wässrige Lösung mittels Brookfield-Viskosimeter RVT bei 20°C, Spindel 4 oder 5, 20 U/min: ca. 5.000 mPas;
- Fettsäuren: kommerziell erhältliche Fettsäuren mit 14-18 C-Atomen.

### II Herstellung der Klebestifte

Die Komponenten gemäß Tabelle I wurden bei ca. 80 °C gemischt und gemäß der Beschreibung zu Klebestiften verarbeitet. Die jeweiligen Zusammensetzungen sind in Gewichtsteilen angegeben.

### III Eigenschaften der Klebestifte

### a) Druckfestigkeit

Unter dem Begriff Druckfestigkeit ist die beim Zusammenbrechen der Stiftform unter Druckbelastung parallel zur Längsachse gemessene Höchstlast zu verstehen.

Zur Messung der Druckfestigkeit dient das Prüfgerät Modell 464L, Messkopf 709, der Fa. Erichsen.

Der unmittelbar oberhalb des Kolbens abgeschnittene Klebstoff mit einer Mindestlänge von 30 mm wird zwischen zwei Haltestücke eingesteckt; hierbei handelt es sich um Scheiben aus Hart-PVC, deren Dicke ca. 10 mm beträgt und die eine an den jeweiligen Stiftdurchmesser angepasste kreisrunde Vertiefung von 3 mm aufweisen. Der mit den Haltestücken versehene Stift wird zentrisch auf den Prüftisch des Druckfestigkeitstesters gestellt. Die Höhe des Kraftmessinstrumentes über dem Prüftisch wird der Höhe des Prüfteils angepasst. Dann fährt man den Messkopf mit einer Vorschubgeschwindigkeit von ca. 70 mm pro Minute gegen den zu prüfenden Stift. Nach Erreichen der größten Druckkraft wird der Wert in Newton von der digitalen Anzeige abgelesen.

### d) Auftragsverhalten (Lumps)

Der so genannte Lump-Test beschreibt den (unerwünschten) Abwurf von kleineren und größeren Brocken beim Auftragen des Klebestifts auf das Papier in Abweichung von einem durchgehenden Klebefilm. Die Stifte werden dabei unter Belastung mit einem definierten Prüfgewicht in mehreren Bahnen über ein DIN A4-Blatt gefahren. Das Gleitverhalten wird qualitativ beurteilt. Die Gleichmäßigkeit des Klebefilms und die Brockenbildung werden optisch beurteilt.

### IV Ergebnisse

Die Ergebnisse sind in Tabelle II zusammengefasst.

**Tabelle I: Zusammensetzungen (Angaben in Gew.-%)**

| Komponente | Beispiel | |
|---|---|---|
| | 1 | 2 |
| Stärkemischether A (44%ige wässrige Zubereitung) | - | 54,0 |
| Stärkemischether B (44%ige wässrige Zubereitung) | 53,0 | - |
| Stärkemischether C (Feststoff) | - | 2,4 |
| Natronlauge (10%) | 1,4 | - |
| Fettsäuren | 5,7 | 5,7 |
| Saccharose | 20,0 | 20,3 |
| Caprolactam | 1,0 | 1,0 |
| Hilfsstoffe | 2,7 | 0,3 |
| entmineralisiertes Wasser | Ad 100 | Ad 100 |

**Tabelle II: Versuchsergebnisse mit den Stiften hergestellt aus Zusammensetzungen gemäß Tabelle I**

| Eigenschaft | Beispiel | |
|---|---|---|
| | 1 | 2 |
| Druckfestigkeit (20g) [N] | 86 | 92 |
| Auftrag (Lumps, optisch) | Minimales Bröckeln; Minimales Schmieren; Gutes Gleitverhalten | Minimales Bröckeln; Minimales Schmieren; Sehr gutes Gleitverhalten |

Die in Tabelle II dargestellten Ergebnisse zeigen, dass die erfindungsgemäßen Klebestifte ausgezeichnete Druckfestigkeit und Auftragsverhalten aufweisen. Durch Einsatz eines Gemischs zweier Stärkemischether auf reiner Kartoffelstärkebasis, wobei einmal die Hydroxyalkyl- und einmal die Carboxymethylgruppen im molaren Überschuss vorliegen, lassen sich die Druckfestigkeit und das Gleitverhalten nochmals optimieren. Die erreichte Anfangsklebkraft entspricht der Anfangsklebkraft, die sich bei Anwendung von handelsüblichen Klebestiften auf Basis von viskositätsreduzierten Hydroxyalkylstärken erreichen lässt, bzw. übertrifft diese leicht. Die Anfangsklebkraft handelsüblicher Klebestifte auf Basis von Polyvinylpyrrolidon wird deutlich übertroffen.

## Patentansprüche

1. Klebestift, enthaltend eine wässrige Zubereitung mindestens einer Hydroxyalkylcarboxymethylstärke mit einer Viskosität kleiner als 2.000.000 mPas, bestimmt als 40 Gew.-%ige wässrige Lösung mittels Brookfield-Viskosimeter RVT bei 20°C, Spindel 7, 20 U/min, und Seife.

2. Klebestift nach Anspruch 1, **dadurch gekennzeichnet, dass** die Hydroxyalkylcarboxymethylstärke ausgewählt ist aus Hydroxyethylcarboxymethylstärken, Hydroxypropylcarboxymethylstärken und/oder Hydroxyethylhydroxypropylcarboxymethylstärken.

3. Klebestift nach Anspruch 1 oder 2, **dadurch gekennzeichnet, dass** die Hydroxyalkylcarboxymethylstärke ausgewählt ist aus Hydroxypropylcarboxymethylstärken.

4. Klebestift nach Anspruch 3, **dadurch gekennzeichnet, dass** die Hydroxypropylcarboxymethylstärken durch Umsetzung einer Stärke mit Monochloressigsäure und/oder Monochloracetat und Propylenoxid erhalten werden, wobei Monochloressigsäure und/oder Monochloracetat einerseits und Propylenoxid andererseits in einem molaren Verhältnis von 10 : 1 bis 1 : 100 eingesetzt werden.

5. Klebestift nach einem der vorstehenden Ansprüche, **dadurch gekennzeichnet, dass** der Substitutionsgrad (DS) der Hydroxyalkylcarboxymethylstärke 0,1 bis 2,0, vorzugsweise 0,2 bis 1,0 beträgt.

6. Klebestift nach einem der vorstehenden Ansprüche, **dadurch gekennzeichnet, dass** Hydroxyalkylcarboxymethylstärke in einer Gesamtmenge von 5 bis 50, vorzugsweise von 10 bis 40 Gew.-%, bezogen auf die Gesamtmasse des Klebestiftes, enthalten ist.

7. Klebestift nach einem der vorstehenden Ansprüche, **dadurch gekennzeichnet, dass** die Hydroxyalkylcarboxymethylstärke eine Viskosität von 100 bis 1.000.000 mPas, vorzugsweise von 2.000 bis 100.000 mPas, besonders bevorzugt von 10.000 bis 80.000, jeweils bestimmt als 40 Gew.-%ige wässrige Lösung mittels Brookfield-Viskosimeter RVT bei 20°C, Spindel 7, 20 U/min, aufweist.

8. Klebestift nach einem der vorstehenden Ansprüche, **dadurch gekennzeichnet, dass** die Hydroxyalkylcarboxymethylstärke ein entsprechendes Derivat der Kartoffelstärke ist.

9. Klebestift nach einem der vorstehenden Ansprüche, **dadurch gekennzeichnet, dass** er aus
- 5 bis 50 Gew.-% makromolekularem Stoff, enthaltend mindestens eine Hydroxyalkylcarboxymethylstärke,
- 3 bis 20 Gew.-% Seife,
- 0 bis 30 Gew.-% Saccharose,
- 0 bis 25 Gew.-% weitere Hilfsstoffe, und
- 25 bis 92 Gew.-% Wasser besteht, wobei die Gesamtmenge der Inhaltsstoffe 100 Gew.-% ergibt.

10. Verwendung eines Klebestiftes nach einem der Ansprüche 1 bis 9 zum flächigen Verbinden von Substraten, insbesondere zum Verbinden von Papier, Pappe, Holz und/oder Kunststoff miteinander.

## Claims

1. A glue stick, containing an aqueous preparation of at least one hydroxyalkylcarboxymethyl starch having a viscosity less than 2,000,000 mPas, determined as a 40-wt% aqueous solution using a Brookfield RVT viscosimeter at 20°C, spindle 7, 20 rpm, and soap.

2. The glue stick according to Claim 1, **characterised in that** the hydroxyalkylcarboxymethyl starch is selected from hydroxyethylcarboxymethyl starches, hydroxypropylcarboxymethyl starches, and/or hydroxyethylhydroxypropylcarboxymethyl starches.

3. The glue stick according to Claim 1 or 2, **characterised in that** the hydroxyalkylcarboxymethyl starch is selected from hydroxypropylcarboxymethyl starches.

4. The glue stick according to Claim 3, **characterised in that** the hydroxypropylcarboxymethyl starches are obtained by reacting a starch with monochloroacetic acid and/or monochloroacetate and propylene oxide, where monochloroacetic acid and/or monochloroacetate on the one hand and propylene oxide on the other hand are used at a molar ratio from 10 : 1 to 1 : 100.

5. The glue stick according to one of the preceding claims, **characterised in that** the degree of substitution (DS) of the hydroxyalkylcarboxymethyl starch is 0.1 to 2.0, by preference 0.2 to 1.0.

6. The glue stick according to one of the preceding claims, **characterised in that** hydroxyalkylcarboxymethyl starch is contained in a total quantity from 5 to 50, by preference from 10 to 40 wt%, based on the total mass of the glue stick.

7. The glue stick according to one of the preceding claims, **characterised in that** the hydroxyalkylcarboxymethyl starch has a viscosity from 100 to 1,000,000 mPas, by preference from 2,000 to 100,000 mPas, particularly preferably from 10,000 to 80,000, determined in each case as a 40-wt% aqueous solution using a Brookfield RVT viscosimeter at 20°C, spindle 7, 20 rpm.

8. The glue stick according to one of the preceding claims, **characterised in that** the hydroxyalkylcarboxymethyl starch is a corresponding derivative of potato starch.

9. The glue stick according to one of the preceding claims, **characterised in that** it is made up of:
- 5 to 50 wt% macromolecular substance containing at least one hydroxyalkylcarboxymethyl starch,
- 3 to 20 wt% soap,
- 0 to 30 wt% sucrose,
- 0 to 25 wt% further adjuvants, and
- 25 to 92 wt% water,
the total quantity of the ingredients yielding 100 wt%.

10. Use of a glue stick according to one of Claims 1 to 9 for planar joining of substrates, in particular for joining paper, cardboard, wood, and/or plastic to one another.

## Revendications

1. Bâton de colle contenant une préparation aqueuse d'au moins un hydroxyalkylcarboxyméthylamidon dont la viscosité est inférieure à 2.000.000 mPas, déterminée sous la forme d'une solution aqueuse à 40 % en poids au moyen d'un viscosimètre de Brookfield RVT à 20 °C, broche 7, 20 tours/minute, et un savon.

2. Bâton de colle selon la revendication 1, **caractérisé en ce que** l'hydroxyalkylcarboxyméthylamidon est choisi parmi des hydroxyéthylcarboxyméthylamidons, des hydroxypropylcarboxyméthylamidons et/ou des hydroxyéthylhydroxypropylcarboxyméthylamidons.

3. Bâton de colle selon la revendication 1 ou 2, **caractérisé en ce que** l'hydroxyalkylcarboxyméthylamidon est choisi parmi des hydroxypropylcarboxyméthylamidons.

4. Bâton de colle selon la revendication 3, **caractérisé en ce qu'**on obtient les hydroxypropylcarboxyméthylamidons par mise en réaction d'un amidon avec de l'acide monochloroacétique et/ou avec du monochloroacétate et de l'oxyde de propylène, l'acide monochloroacétique et/ou le monochloroacétate d'une part et l'oxyde de propylène d'autre part étant mis en oeuvre dans un rapport molaire de 10 : 1 à 1 : 100.

5. Bâton de colle selon l'une quelconque des revendications précédentes, **caractérisé en ce que** le degré de substitution (DS) de l'hydroxyalkylcarboxyméthylamidon s'élève de 0,1 à 2,0, de préférence de 0,2 à 1,0.

6. Bâton de colle selon l'une quelconque des revendications précédentes, **caractérisé en ce qu'**il contient l'hydroxyalkylcarboxyméthylamidon en une quantité totale de 5 à 50, de préférence de 10 à 40 % en poids, rapportés à la masse totale du bâton de colle.

7. Bâton de colle selon l'une quelconque des revendications précédentes, **caractérisé en ce que** l'hydroxyalkylcarboxyméthylamidon présente une viscosité de 100 à 1.000.000 mPas, de préférence de 2.000 à 100.000 mPas, de manière particulièrement préférée de 10.000 à 80.000 mPas, chaque fois déterminée sous la forme d'une solution aqueuse à 40 % en poids au moyen d'un viscosimètre de Brookfield RVT à 20 °C, broche 7, 20 tours/minute.

8. Bâton de colle selon l'une quelconque des revendications précédentes, **caractérisé en ce que** l'hydroxyalkylcarboxyméthylamidon représente un dérivé correspondant de l'amidon de pomme de terre.

9. Bâton de colle selon l'une quelconque des revendications précédentes, **caractérisé en ce qu'**il est constitué par :
- de 5 à 50 % en poids d'une substance macromoléculaire contenant au moins un hydroxyalkylcarboxyméthylamidon ;
- de 3 à 20 % en poids de savon ;
- de 0 à 30 % en poids de saccharose ;
- de 0 à 25 % en poids d'adjuvants supplémentaires ; et
- de 25 à 92 % en poids d'eau, la quantité totale des constituants représentant 100 % en poids.

10. Utilisation d'un bâton de colle selon l'une quelconque des revendications 1 à 9 pour la liaison surfacique de substrats, en particulier pour la liaison réciproque de papier, de carton, de bois et/ou d'une matière synthétique.
